# EUROPEAN PATENT APPLICATION

(11) **EP 4 075 447 A1**
(43) Date of publication of application: **19.10.2022**
(21) Application number: 21305504.9
(22) Date of filing: 16.04.2021
(51) Int. Cl.: G21C 3/33

(54) **NUCLEAR FUEL ASSEMBLY TOP NOZZLE COMPRISING A HOLD-DOWN DEVICE**

(71) Applicant: Framatome, 92400 Courbevoie (FR)
(72) Inventor: LABARRIERE, Eric, 01800 SAINT- ELOI (FR); STREIT, Dominik, 91052 ERLANGEN (DE); ECKSTEIN, Daniel, 96472 RÖDENTAL (DE)
(74) Representative: Lavoix

(57) **Abstract**

The top nozzle comprises an intermediate plate (26) axially positioned between an upper plate (24) and a lower plate (22) with being axially movable between an upper position and a lower position, one or several main spring member(s) (28) arranged such as to permanently push the intermediate plate (26) towards the upper plate (24), one or several spring member(s) (30) arranged to push to intermediate plate (26) towards the upper plate (24) when the intermediate plate (26) is located between the lower position and an intermediate position associated to this auxiliary spring member (30), and a preload element (32) associated to each auxiliary spring member (30) with being arranged such that the auxiliary spring member (30) abuts against the upper plate (24) via the preload element (32) when the intermediate plate (26) is located between the intermediate position associated to said auxiliary spring member (30) and the upper position.

## Description

The present invention relates to a top nozzle for a nuclear fuel assembly.

A nuclear fuel assembly (or "fuel assembly") comprises nuclear fuel rods (or "fuel rods") arranged in a bundle and a skeleton supporting the fuel rods.

Each fuel rod comprises a tubular cladding containing nuclear fuel (e.g. nuclear fuel pellets, in particular UO₂ pellets), the two ends of the tubular cladding being closed by respective end plugs.

The skeleton comprises for example a bottom nozzle and a top nozzle spaced along an assembly axis, guide thimbles extending along the assembly axis between the bottom nozzle and the top nozzle with connecting the bottom nozzle and the top nozzle together, and spacer grids attached to the guide thimbles with being distributed along the guide thimbles, between the bottom nozzle and the top nozzle.

The fuel rods extend between the bottom nozzle and the top nozzle with passing through the spacer grids. The function of the spacer grids is to support the fuel rods along the assembly axis and transversely to the assembly axis with maintaining the fuel rods in a spaced relationship.

In operation, the fuel assembly is inserted into a reactor core received into a reactor vessel, with the longitudinal axis of the fuel assembly extending substantially vertically, and a coolant flows vertically through the fuel assembly for moderating the nuclear reaction and for retrieving heat produced by the fuel rods.

The coolant flowing upwardly through the fuel assembly generates a force that tends to lift-off the fuel assembly. This force is generally called the "hydraulic lift force". The hydraulic lift force can overcome the weight of the fuel assembly.

In view of counteracting the hydraulic lift force, the fuel assembly is generally provided with a hold-down device that is configured to bias the fuel assembly downwardly.

The hold-down device is for example provided on the top nozzle and is configured to bear onto a reactor upper plate for pushing the fuel assembly downwardly. The hold-down device comprises spring members that generate a force that is substantially linearly proportional to the deflection of the spring members.

The hold-down force required to prevent fuel assembly lift-off varies with different operating conditions since the hydraulic lift force depends on the coolant temperature (since the coolant temperature influence the coolant density and thus the hydraulic lift force) and the volume flow rate of the coolant through the reactor.

During cold reactor startup, the coolant density is high which results in a high hydraulic lift force and the required hold-down force is high. In normal power operation, the coolant density is low and the required hold-down force is low.

Besides, due to differential thermal expansion between the fuel assembly and the reactor vessel, the hold-down force generated by the hold-down device varies with the temperature. For example, an increase in temperature of the nuclear reactor results in a reduction of the hold-down force generated by the hold-down device.

Despite this effect, the hold-down force generated by the hold-down device during hot operating conditions is generally higher than necessary since the lower coolant density also results in a lower hydraulic lift force.

Besides, irradiation of the fuel assembly generally causes a decrease of the hold-down force due to spring relaxation during the lifetime of the fuel assembly. This is compensated by providing a hold-down device that generates a higher hold-down force than necessary before irradiation of the fuel assembly.

As a consequence, the hold-down device exerts unnecessarily high levels of mechanical stress onto the fuel assembly structure, which is one of the main causes for fuel assembly bow.

The consequences of fuel assembly bow include difficulties during handling operations such as loading / unloading the fuel assembly into or out from the reactor core and safety concerns such as incomplete insertion of control rods inserted into the guide thimbles for lowering the nuclear reactivity of the nuclear fuel assembly.

One of the aims of the invention is to propose a hold-down device that allows better tuning of the hold-down force.

To this end, the invention proposes a top nozzle for a nuclear fuel assembly, the top nozzle extending along a nozzle axis and comprising:
- a lower plate;
- an upper plate axially spaced from the lower plate;
- an intermediate plate axially positioned between the upper plate and the lower plate with being axially movable between an upper position and a lower position;
- one or several main spring member(s), each main spring member being arranged such as to permanently push the intermediate plate towards the upper plate;
- one or several spring member(s), each auxiliary spring member being arranged to push to intermediate plate towards the upper plate when the intermediate plate is located between the lower position and an intermediate position associated to this auxiliary spring member; and
- a preload element associated to each auxiliary spring member with being arranged such that the auxiliary spring member abuts against the upper plate via the preload element when the intermediate plate is located between the intermediate position associated to said auxiliary spring member and the upper position.

The top nozzle incorporating such a hold-down device provides better tuning of the hold-down force for various operating conditions and during the lifetime of the fuel assembly, thus allowing a reduction of the risk for fuel assembly bow.

The hold-down device provides for sufficient and need-tailored hold-down force at cold operating conditions (e.g. starting phase of an operating cycle) during which the main spring member(s) and at least one of the auxiliary spring member(s) is(are) active to generate the hold-down force, while allowing for a decrease of the hold-down force at hot operating conditions (e.g. normal operating cycle), during which only the main spring member(s) is(are) active, the auxiliary spring member(s) no longer acting onto the intermediate plate.

In specific embodiments, the top nozzle comprises one or several of the following optional features, taken individually or according to any technically feasible combination:
- each preload element extends through the intermediate plate;
- the lower plate is connected to the upper plate via at least one connection element, each connection element extending axially between the lower plate and the upper plate;
- each main spring member is fitted onto a said connection element;
- each connection element onto which a main spring member is fitted is a tube, in particular a guide thimble;
- each auxiliary spring member is fitted onto a said connection element;
- each connection element onto which an auxiliary spring member is fitted is a tube, in particular a guide thimble;
- it comprises a retaining member configured to limit the axial movement of the intermediate plate towards the upper plate;
- the retaining member is elongated axially and comprising a fixed end fixedly attached to one of the lower plate and the upper plate, the retaining member sliding axially through the other one of the lower plate and the upper plate;
- it comprises a lower part and an upper part which are tubular, the lower part and the upper part being telescopically mounted one onto the other along the nozzle axis, the intermediate plate being receive inside the upper part with being fixedly attached to the upper part and the lower plate being received inside the lower part with being fixedly attached to the lower part.

The invention also relates to a nuclear fuel assembly extending along a longitudinal axis and a bottom nozzle, a top nozzle as defined above, guide thimbles extending between the bottom nozzle and the top nozzle with connecting the bottom nozzle and the top nozzle, nuclear fuel rods positioned between the bottom nozzle and the top nozzle, and spacer grids fixedly attached to the guide thimbles, the nuclear fuel rods extending between the bottom nozzle and the top nozzle with passing through the spacer grids.

The invention and its advantages will be better understood upon reading the following description, given solely by way of non-limiting example and with reference to the appended drawings, on which:
- Figure 1 is a side elevation view of a nuclear fuel assembly comprising a top nozzle incorporating a hold-down device;
- Figure 2 - 4 are cross-sectional views of the hold-down device in three different configurations.

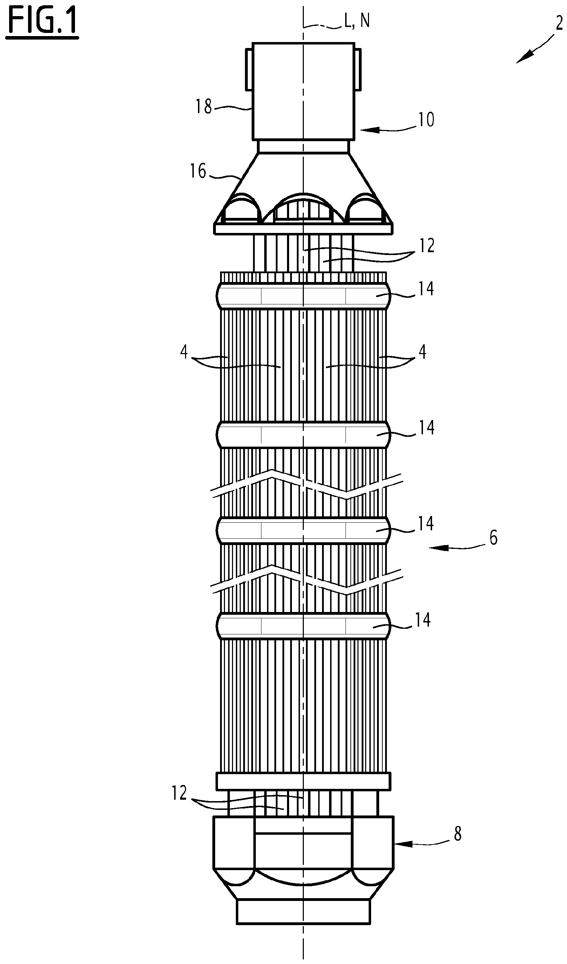

The nuclear fuel assembly 2 of Figure 1 comprises a bundle of nuclear fuel rods 4 and a skeleton 6 for supporting the fuel rods 4. The fuel rods 4 extend parallel to each other and to an assembly axis L.

The skeleton 6 comprises a bottom nozzle 8, a top nozzle 10, a plurality of guide thimbles 12 and a plurality of spacer grids 14.

The bottom nozzle 8 and the top nozzle 10 are spaced along the assembly axis L. The guide thimbles 12 extend parallel to the assembly axis L and connect the bottom nozzle 8 to the top nozzle 10 with maintaining a predetermined spacing along assembly axis L between the bottom nozzle 8 and the top nozzle 10. The fuel rods 4 are received between the bottom nozzle 8 and the top nozzle 10.

The spacer grids 14 are distributed along the bundle of fuel rods 4. Each spacer grid 14 is fixedly attached to the guide thimbles 12, with the guide thimbles extending through the spacer grid 14.

The fuel rods 4 extend through the spaced grids 14. Each spacer grid 14 is configured for supporting the fuel rods 4 in a transversely spaced relationship. Each spacer grid 14 is configured for supporting the fuel rods 4 along the assembly axis L and transversely to the assembly axis L.

In operation, the nuclear fuel assembly 2 is inserted in a reactor core inside a reactor vessel, between a lower core plate and an upper core plate. The bottom nozzle 8 is configured to rest onto the lower core plate. The top nozzle 10 is configured to bear against the upper core plate with urging the nuclear fuel assembly 2 downwardly against the hydraulic lift-up force.

As visible on Figure 1, the top nozzle 10 extends along a nozzle axis N. The nozzle axis N coincides with the assembly axis L.

The top nozzle 10 comprises a lower part 16 that is fixedly attached to the guide thimbles 12 and an upper part 18 that is movable along the nozzle axis N relative to the lower part 16. The upper part 18 is configured for resting onto the upper core plate.

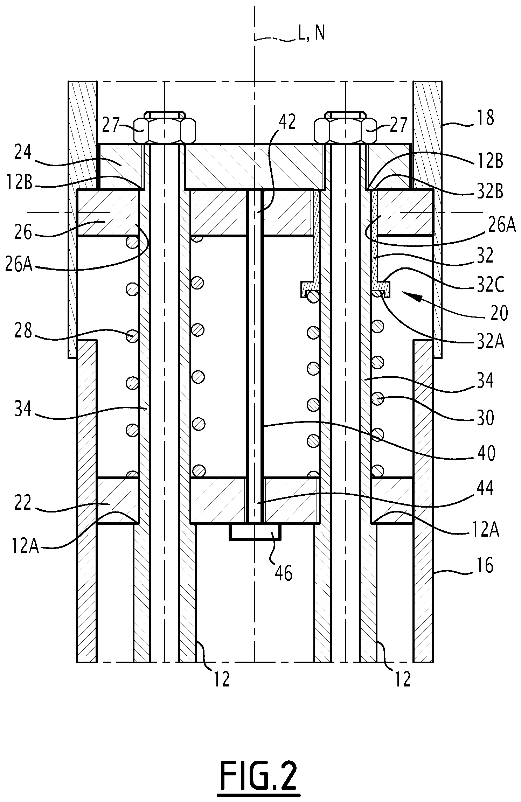

As illustrated on Figures 2 - 4, the top nozzle 10 comprises a hold-down device 20 configured for pushing the upper part 18 upwardly relative to the lower part 16 along the nozzle axis N.

Hence, when the upper part 18 abuts the upper core plate, the lower part 16 is pushed downwardly and the fuel assembly 2 is thus pushed downwardly to hold-down the fuel assembly 2 against hydraulic lift force.

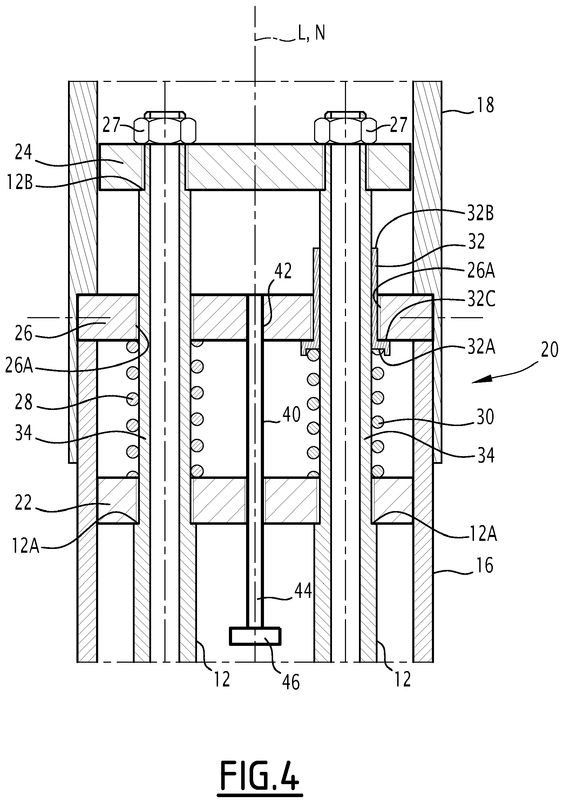

The hold-down device 20 comprises a lower plate 22, an upper plate 24 axially spaced from the lower plate 22, and an intermediate plate 26 provided between the lower plate 22 and the upper plate 24, the intermediate plate 26 being axially movable along the nozzle axis N relative to lower plate 22 and the upper plate 24, between and upper position (Figure 2) and a lower position (Figure 4).

Preferably, the lower plate 22 and the upper plate 24 are maintained at fixed positions along the nozzle axis N.

In one example, the lower plate 22 and the upper plate 24 are connected one to the other via connection elements, the intermediate plate 26 moving axially between the lower plate 22 and the upper plate 24 with sliding along the connection elements.

Preferably, the lower plate 22 and the upper plate 24 are connected via the connection elements such that the lower plate 22 and the upper plate 24 are maintained at respective fixed positions along the connection elements.

In a particular embodiment, the upper plate 24 is fixed axially relative to the connection elements and/or the lower plate 22 is permanently pushed downwardly by at least one elastic member in abutment against at least one lower stop member limiting a downward movement of the lower plate 22 along the connection elements.

As illustrated on Figures 2 - 4, the connection elements comprise for example guide thimbles 12 of the nuclear fuel assembly 2.

The guide thimbles 12 extend through the lower plate 22, the upper plate 24 and the intermediate plate 26.

The lower plate 22 is retained axially along the guide thimbles 12 such as to limit a downward movement of the lower plate 22 relative to the guide thimbles 12.

In this view, at least one guide thimble 12 or each guide thimble 12 is for example provided with a lower stop member limiting a downward movement of the lower plate 22 along the guide thimble 12. The lower stop member is for example a shoulder 12A of the guide thimble 12.

As it will be explained later, the lower plate 22 is permanently pushed downwardly by one or several spring member(s).

The upper plate 24 is for example maintained at a fixed position axially along the guide thimbles 12.

In this view, the upper plate 24 is for example mounted on at least one guide thimble 12 or each the guide thimble 12 with being axially fixed between an upper shoulder 12B of the guide thimble 12 and a nut 27 screwed onto an external thread of the guide thimble 12.

The intermediate plate 26 is slidable along the guide thimbles 12, between the lower plate 22 and the upper plate 24.

The hold-down device 20 comprises at least one main spring member 28, each main spring member 28 being arranged between the lower plate 22 and the intermediate plate 26 such as to permanently push the intermediate plate 26 towards the upper plate 24.

Each main spring member 28 is permanently active along the entire stroke of the intermediate plate 26 between the upper position (Figure 2) and the lower position (Figure 4).

The lower plate 22 is permanently pushed downwardly by each main spring member 28, preferably in abutment against each lower stop member 12A. The lower plate 22 is thus maintained in a fixed position along the guide thimbles 12.

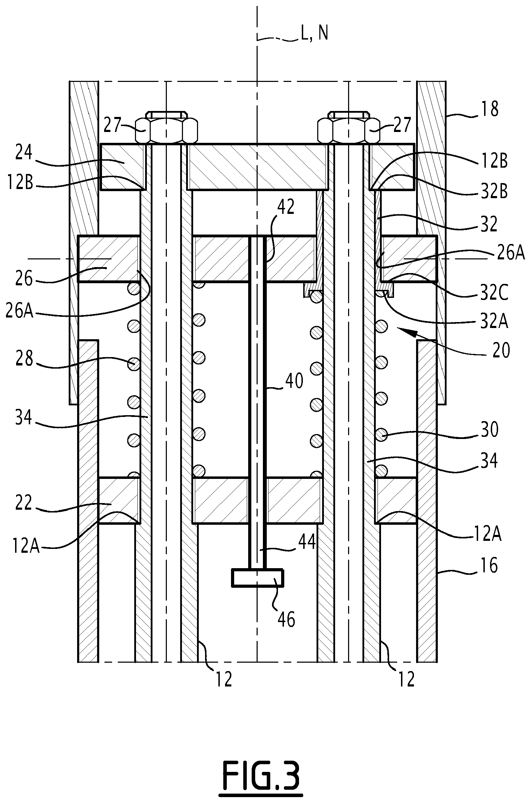

The hold-down device 20 comprises one or several auxiliary spring member(s) 30, each auxiliary spring member 30 being arranged such as to push to intermediate plate 26 towards the upper plate 24 when the intermediate plate 26 is located between the lower position and an intermediate position associated to this auxiliary spring member 30 (Figure 3), the intermediate position being located between the lower position and the upper position.

Each auxiliary spring member 30 is arranged such as to be active to push the intermediate plate 26 towards the upper plate 24 when the intermediate plate 26 is located between the lower position and the associated intermediate position and to be inactive when the intermediate plate 26 is located between the associated intermediate position and the upper position.

When the intermediate plate 26 is located between the lower position and the intermediate position associated to one or several auxiliary spring member(s) 30, the intermediate plate 26 is pushed towards the upper plate 24 by each main spring member 28 and by each auxiliary spring member 30 associated to this intermediate position.

When the intermediate plate 26 is located between an intermediate position associated to one or several auxiliary spring member(s) 30 and the upper position, the intermediate plate 26 is pushed towards the upper plate 24 by each main spring member 28 without being pushed towards the upper plate 24 by each auxiliary spring member 30 associated to this intermediate position.

The hold-down device 20 comprises a preload element 32 associated to each auxiliary spring member 30 and arranged such that the auxiliary spring member 30 abuts against the upper plate 24 via the preload element 32 when the intermediate plate 26 is located between the intermediate position associated to this auxiliary spring member 30 and the upper position.

The preload element 32 associated to each auxiliary spring member 30 is configured such that the auxiliary spring member 30 abutting the upper plate 24 via the preload element 32 is preloaded.

The preload element 32 extends for example through the intermediate plate 26, the auxiliary spring member 30 being located between the lower plate 22 and the intermediate plate 26 and abutting the upper plate 24 via the preload element 32 extending through the intermediate plate 26 when the intermediate plate 26 is between the intermediate position associated to the auxiliary spring member 30 and the upper position.

In such an example, advantageously, when the intermediate plate 26 is between the intermediate position associated to an auxiliary spring member 30 and the lower position, this auxiliary spring member 30 abuts the intermediate plate 26 via the preload element 32.

Each guide thimble 12 has an upper axial portion 34 extending axially between the lower plate 22 and the upper plate 24.

The upper axial portion 34 of each guide thimble 12 extends through the intermediate plate 26. The intermediate plate 26 is provided with a respective opening 26A for the upper axial portion 34 of each guide thimble 12.

Each main spring member 28 is for example a helical spring, having a lower end abutting the lower plate 22 and an upper end abutting the intermediate plate 26.

Each main spring member 28 is for example fitted onto an upper axial portion 34 of a guide thimble 12 such that the main spring member 28 is guided by the upper axial portion 34 of the guide thimble 12. Each main spring member 28 is for example provided as a helical spring extending around the upper axial portion 34 onto which the main spring member 28 is fitted.

Each auxiliary spring member 30 is for example a helical spring, having a lower end abutting the lower plate 22 and an upper end abutting the preload element 32.

Each auxiliary spring member 30 is for example fitted onto an upper axial portion 34 of a guide thimble 12 such as to be guided by the upper axial portion 34 of the guide thimble 12.

Each auxiliary spring member 30 is for example provided as a helical spring extending around the upper axial portion 34 onto which the auxiliary spring member 30 is fitted.

Each preload element 32 is for example tubular and slidably fitted onto a guide thimble 12, axially between an auxiliary spring member 30 and the upper plate 24.

Each preload element 32 has for example a lower bearing surface 32A onto which the auxiliary spring member 30 pushes to urge the preload element 32 upwardly, an upper bearing surface 32B abutting the upper plate 24 when the intermediate plate is between the intermediate position and the upper position and an activation bearing surface 32C abutting the intermediate plate 26 when the intermediate plate 26 is located between the intermediate position and the lower position.

The intermediate plate 26 is slidable along the preload element 32 between the intermediate position and the upper position.

When the intermediate plate 26 is between the intermediate position associated to an auxiliary spring member 30 and the lower position, the auxiliary spring member 30 pushes onto the intermediate plate 26 via the preload element 32. The auxiliary spring member 30 is bearing onto the lower bearing surface 32A and the intermediate plate 26 is bearing onto the activation bearing surface 32C.

When the intermediate plate 26 is between the intermediate position associated to an auxiliary spring member 30 and the lower position, the preload element 32 is moved downwardly towards the lower plate 22 jointly with the intermediate plate 26 such that the preload element 32 no longer abuts the upper plate 24 (Figure 4).

The lower plate 22 is permanently urged downwardly by each auxiliary spring member 30, preferably in abutment against each lower stop member 12.

In a preferred example, in the different positions, the main spring member(s) 28 and the auxiliary spring member(s) 30 permanently urge the lower plate 22 downwardly with maintaining lower plate 22 in abutment against each lower stop member 12A, in a fixed position along the guide thimbles 12.

Optionally, the top nozzle 10 comprises a retaining member 40 configured to limit the axial movement of the intermediate plate 26 towards the upper plate 24 relative to the lower plate 22. Such a retaining member 40 is useful e.g. during mounting/dismounting operations, in particular in the present case upon removing nuts 27.

The retaining member 40 is for example elongated axially and comprised a fixed end 42 fixedly attached to one of the lower plate 22 and the intermediate plate 26, the retaining member 40 sliding axially through a hole provide in the other one of the lower plate 22 and the intermediate plate 26.

Optionally, the other end 44 of the retaining member 40 is provided with a stop member 46 for limiting the spacing between the lower plate 22 and the intermediate plate 26.

In one exemplary embodiment, the fixed end 42 is fixedly attached to the intermediate plate 26, the retaining member 40 sliding axially through a hole provided in the lower plate 22, the other end 44 of the retaining member 40 being provided with the stop member 46.

The lower part 16 of the top nozzle 10 is rigidly connected to the lower plate 22 and the upper part 18 of the top nozzle 10 is rigidly connected to the intermediate plate 26, such that the intermediate plate 26 moves axially with the upper part 18.

The lower part 16 and the upper part 18 are preferably tubular and telescopically mounted one onto the other, the lower plate 22 being received inside the lower part 16 and the upper plate 24 and the intermediate plate 26 being received inside the upper part 18.

The operation of the hold-down device 20 will now be described with reference to Figures 2 - 4.

The upper part 18 of the top nozzle 10 is for example initially in an uppermost position, the intermediate plate 26 being thus its upper position adjacent the upper plate 24.

When the upper part 18 of the top nozzle 10 abuts the upper core plate, the upper part 18 tends to move downwardly, thus moving the intermediate plate 26 downwardly towards the lower plate 22.

As long as the intermediate plate 26 is located between the upper position and the intermediate position associated to an auxiliary spring member 30, the main spring member(s) 28 push the intermediate plate 26 and the lower plate 22 away from each other but the auxiliary spring member 30 is inactive and does not act on the intermediate plate 26. The hold-down force generated by the hold-down device 20 is generated only by the main spring member(s) 28.

As long as the intermediate plate 26 is located between the upper position and the intermediate position associated to an auxiliary spring member 30, the intermediate plate 26 does not abut against the preload element 32 associated to this auxiliary spring member 30 which abuts against the upper plate 24 via the preload element 32.

When the intermediate plate 26 reaches the intermediate position associated to an auxiliary spring member 30 and is located between the intermediate position and the lower position, the main spring member(s) 28 and the auxiliary spring member 30 are simultaneously active and cooperate to push the intermediate plate 26 upwardly.

Below a given intermediate position of the intermediate plate 26, the hold-down force generated by the hold-down device 20 is generated jointly by the main spring member(s) 28 and by each auxiliary spring member 30 associated to this intermediate position or to a lower intermediate position.

Hence, the hold-down force generated by the hold-down device 20 becomes higher when the intermediate plate 26 moves below each intermediate position, with a step in the hold-down force generated when the intermediate plate 26 passes the intermediate position due to the preload of the auxiliary spring member(s) 30.

Due to differential thermal expansion of the reactor vessel and the nuclear fuel assembly, the intermediate plate 26 tends to move up relative to the lower plate 22 in normal operating conditions and to move down in cold startup condition.

In cold startup condition, the main spring member(s) 28 and auxiliary spring member(s) 30 are simultaneously acting to provide the maximum hold-down force.

With temperature increases, the intermediate plate 26 tends to move up relative to the lower plate 22. The force generated by each auxiliary spring member 30 decreases until the intermediate plate 26 reaches the associated intermediate position and the auxiliary spring member 30 abuts against the upper plate 24 via the associated preload element 32.

At each intermediate position of the intermediate plate 26, the hold-down force is decreased by a force step corresponding to the preload of the auxiliary spring member(s) 30 associated to this intermediate position.

Using the hold-down device 20 with a stepped force relative to the stroke of the upper part of the top nozzle 10, the hold-down force follows the load required to avoid a lift off of the nuclear fuel assembly in the different operating conditions.

The stepped hold-down system can be dimensioned in a way that in the lifetime of the fuel assembly, due to irradiation-induced lengthening of the fuel assembly, the auxiliary spring member(s) 30 become active during the operating conditions such as to compensate a loss of hold-down force due to relaxation of spring members 28 and 30 can be compensated. The overall hold-down force can stay relatively constant over the irradiation time.

While avoiding fuel assembly lift-off in both cold startup conditions and hot operating conditions, the stepped hold-down system reduces the excess hold-down forces in normal (hot) operating conditions. The mechanical stresses exerted over the lifetime of the fuel assembly are significantly reduced, which results in lower fuel assembly bow.

The invention is not limited to the examples and variant discussed above. Other examples and variants may be contemplated.

In the illustrated example, the lower plate 22 and the upper plate 24 are connected via guide thimbles 12.

Alternatively or optionally, the lower plate 22 and the upper plate 24 are connected one to the other with connection elements distinct from the guide thimbles 12. In such case, the main spring member(s) 28 and the auxiliary spring member(s) 30 are optionally fitted onto the connection elements such as to the guided by said connection elements.

Hence, in a general manner, the lower plate 22 and the upper plate 24 are connected one to the other via connection elements, the main spring member(s) 28 and the auxiliary spring member(s) 30 being optionally fitted onto the connection elements such as to the guided by said connection elements.

Besides, the hold-down device 20 may be configured such that the hold-down force generated by the hold-down device 20 has one single step or several successive steps along the axial movement of the intermediate plate 26.

In this view, the hold-down device 20 comprises for example one single intermediate position or several successive intermediate positions with the hold-down force generated by the hold-down device 20 exhibiting a step at the or each intermediate position, with one or several auxiliary spring member(s) 30 being associated to each intermediate position.

When successive intermediate positions are provided, the intermediate positions are distinct from each other.

In one example, the hold-down device comprises at least a first intermediate position and a second intermediate position distinct from the first intermediate position, one or several first auxiliary spring member(s) 30 associated to the first intermediate position and one or several second auxiliary spring member(s) 30 associated to the second intermediate position. The second intermediate position is e.g. lower than the first intermediate position, i.e. closer to the lower position than the first intermediate position.

## Claims

1. Top nozzle for a nuclear fuel assembly, the top nozzle extending along a nozzle axis and comprising :
- a lower plate (22);
- an upper plate (24) axially spaced from the lower plate (22);
- an intermediate plate (26) axially positioned between the upper plate (24) and the lower plate (22) with being axially movable between an upper position and a lower position;
- one or several main spring member(s) (28), each main spring member (28) being arranged such as to permanently push the intermediate plate (26) towards the upper plate (24);
- one or several spring member(s) (30), each auxiliary spring member (30) being arranged to push to intermediate plate (26) towards the upper plate (24) when the intermediate plate (26) is located between the lower position and an intermediate position associated to this auxiliary spring member (30); and
- a preload element (32) associated to each auxiliary spring member (30) with being arranged such that the auxiliary spring member (30) abuts against the upper plate (24) via the preload element (32) when the intermediate plate (26) is located between the intermediate position associated to said auxiliary spring member (30) and the upper position.

2. Top nozzle according to claim 1, wherein each preload element (32) extends through the intermediate plate (26).

3. Top nozzle according to claim 1 or claim 2, wherein the lower plate (22) is connected to the upper plate (24) via at least one connection element, each connection element extending axially between the lower plate (22) and the upper plate (24).

4. Top nozzle according to claim 3, wherein each main spring member (28) is fitted onto a said connection element.

5. Top nozzle according to claim 4, wherein each connection element onto which a main spring member (28) is fitted is a tube, in particular a guide thimble (12).

6. Top nozzle according to any one of claims 3 to 5, wherein each auxiliary spring member (30) is fitted onto a said connection element.

7. Top nozzle according to claim 6, wherein each connection element onto which an auxiliary spring member (30) is fitted is a tube, in particular a guide thimble (12).

8. Top nozzle according to any one of the preceding claims, comprising a retaining member (40) configured to limit the axial movement of the intermediate plate (26) towards the upper plate (24).

9. Top nozzle according to claim 8, wherein the retaining member (40) is elongated axially and comprising a fixed end (42) fixedly attached to one of the lower plate (22) and the upper plate (24), the retaining member (40) sliding axially through the other one of the lower plate (22) and the upper plate (24).

10. Top nozzle according to any one of the preceding claims, comprising a lower part (16) and an upper part (18) which are tubular, the lower part (16) and the upper part (18) being telescopically mounted one onto the other along the nozzle axis (N), the intermediate plate (26) being receive inside the upper part (18) with being fixedly attached to the upper part (18) and the lower plate (22) being received inside the lower part (16) with being fixedly attached to the lower part (16).

11. Nuclear fuel assembly extending along a longitudinal axis (L) and a bottom nozzle (8), a top nozzle (10) as in any one of the preceding claims, guide thimbles (12) extending between the bottom nozzle (8) and the top nozzle (10) with connecting the bottom nozzle (8) and the top nozzle (10), nuclear fuel rods (4) positioned between the bottom nozzle (8) and the top nozzle (10), and spacer grids (14) fixedly attached to the guide thimbles (12), the nuclear fuel rods (4) extending between the bottom nozzle (8) and the top nozzle (10) with passing through the spacer grids (14).
